# EUROPEAN PATENT APPLICATION

(11) **EP 4 757 158 A1**
(43) Date of publication of application: **10.06.2026**
(21) Application number: 25214658.4
(22) Date of filing: 10.11.2025
(51) Int. Cl.: H02M 7/00, H02M 7/487, H02M 7/5395

(54) **SYSTEMS FOR POWER MODULE FOR MULTI-LEVEL INVERTER FOR ELECTRIC VEHICLE**

(30) Priority: 04.12.2024 US 202418968242
(71) Applicant: Borgwarner Inc., Auburn Hills, Michigan 48326 (US)
(72) Inventor: UGARE, Chetan, Nuremberg (DE); BERINDAN, Stefan, Oberasbach (DE); APELSMEIER, Andreas, Pollenfeld (DE)
(74) Representative: Office Freylinger

(57) **Abstract**

A system includes an inverter to convert DC power from a battery to AC power to drive a motor, wherein the inverter includes: a power module including: a positive DC power tab; a negative DC power tab; an AC power tab; a first neutral power tab; a second neutral power tab, wherein the first neutral power tab and the second neutral power tab are on opposite sides of the positive DC power tab and the negative DC power tab; a first switch electrically connected to the positive DC power tab and the AC power tab; a second switch electrically connected to the negative DC power tab and the AC power tab; and one or more switches electrically connected to the AC power tab and one or more of the first neutral power tab or the second neutral power tab.

## Description

### TECHNICAL FIELD

Various embodiments of the present disclosure relate generally to systems for a power module for a multi-level inverter, and, more particularly, to systems for a power module for a multi-level inverter for an electric vehicle.

### BACKGROUND

Inverters, such as those used to drive a motor in an electric vehicle, for example, are responsible for converting High Voltage Direct Current (HVDC) into Alternating Current (AC) to drive the motor. In an inverter, heat may affect an operation of power device switches, and therefore may affect an operation of the inverter.

The present disclosure is directed to overcoming one or more of these above-referenced challenges.

### SUMMARY OF THE DISCLOSURE

In some aspects, the techniques described herein relate to a system including an inverter to convert DC power from a battery to AC power to drive a motor, wherein the inverter includes: a power module including: a positive DC power tab; a negative DC power tab; an AC power tab; a first neutral power tab; a second neutral power tab, wherein the first neutral power tab and the second neutral power tab are on opposite sides of the positive DC power tab and the negative DC power tab; a first switch electrically connected to the positive DC power tab and the AC power tab; a second switch electrically connected to the negative DC power tab and the AC power tab; and one or more switches electrically connected to the AC power tab and one or more of the first neutral power tab or the second neutral power tab.

In some aspects, the techniques described herein relate to a system, wherein the one or more switches include: one or more first switches electrically connected to the first neutral power tab and the AC power tab; and one or more second switches electrically connected to the second neutral power tab and the AC power tab.

In some aspects, the techniques described herein relate to a system, wherein: the one or more first switches include: a third switch electrically connected to the first neutral power tab, and a fourth switch electrically connected to the third switch and the AC power tab; and the one or more second switches include: a fifth switch electrically connected to the second neutral power tab, and a sixth switch electrically connected to the fifth switch and the AC power tab.

In some aspects, the techniques described herein relate to a system, wherein the power module further includes: a neutral power rail electrically connecting the first neutral power tab and the second neutral power tab, wherein the one or more switches are electrically connected to the neutral power rail and the AC power tab.

In some aspects, the techniques described herein relate to a system, wherein the one or more switches include: a third switch electrically connected to the neutral power rail, and a fourth switch electrically connected to the third switch and the AC power tab.

In some aspects, the techniques described herein relate to a system, wherein the one or more switches include: one or more third switches electrically connected to the first neutral power tab and the AC power tab; and one or more fourth switches electrically connected to the second neutral power tab and the AC power tab.

In some aspects, the techniques described herein relate to a system, wherein: the one or more third switches include: a third switch electrically connected to the neutral power rail, and a fourth switch electrically connected to the third switch and the AC power tab; and the one or more fourth switches include: a fifth switch electrically connected to the neutral power rail, and a sixth switch electrically connected to the fifth switch and the AC power tab.

In some aspects, the techniques described herein relate to a system, wherein the inverter further includes: a first heat sink on a first side of the power module; and a second heat sink on a second side of the power module.

In some aspects, the techniques described herein relate to a system, wherein the inverter further includes: a capacitor electrically connected to the power module.

In some aspects, the techniques described herein relate to a system, further including: the battery configured to supply the DC power to the inverter; and the motor configured to receive the AC power from the inverter to drive the motor, wherein the inverter, the battery, and the motor are provided as a vehicle.

In some aspects, the techniques described herein relate to a power module including: a positive DC power tab; a negative DC power tab; an AC power tab; a first neutral power tab; a second neutral power tab, wherein the first neutral power tab and the second neutral power tab are on opposite sides of the positive DC power tab and the negative DC power tab; a first switch electrically connected to the positive DC power tab and the AC power tab; a second switch electrically connected to the negative DC power tab and the AC power tab; and one or more switches electrically connected to the AC power tab and one or more of the first neutral power tab or the second neutral power tab.

In some aspects, the techniques described herein relate to a power module, wherein semiconductor dies in the first switch, the second switch, and the one or more switches are arranged in a drain-down arrangement.

In some aspects, the techniques described herein relate to a power module, wherein connections to the first neutral power tab and the second neutral power tab are cross-routed over connections to the positive DC power tab and the negative DC power tab.

In some aspects, the techniques described herein relate to a power module, wherein the one or more switches include: one or more first switches electrically connected to the first neutral power tab and the AC power tab; and one or more second switches electrically connected to the second neutral power tab and the AC power tab.

In some aspects, the techniques described herein relate to a power module, further including: a first gate pin electrically connected to the one or more first switches; and a second gate pin electrically connected to the one or more second switches.

In some aspects, the techniques described herein relate to a power module, further including: a gate pin electrically connected to the one or more first switches and the one or more second switches.

In some aspects, the techniques described herein relate to a power module including: a first switch electrically connected to a positive DC power tab and an AC power tab; a second switch electrically connected to a negative DC power tab and the AC power tab; a third switch electrically connected to the AC power tab and a first neutral power tab; and a fourth switch electrically connected to the AC power tab and a second neutral power tab.

In some aspects, the techniques described herein relate to a power module, wherein the third switch and the fourth switch are on opposite sides of the first switch and the second switch.

In some aspects, the techniques described herein relate to a power module, wherein the first switch and the second switch are on opposite sides of the third switch and the fourth switch.

In some aspects, the techniques described herein relate to a power module, further including: a neutral power rail electrically connecting the first neutral power tab and the second neutral power tab, wherein the third switch and the fourth switch are electrically connected to the neutral power rail and the AC power tab.

Additional objects and advantages of the disclosed embodiments will be set forth in part in the description that follows, and in part will be apparent from the description, or may be learned by practice of the disclosed embodiments. The objects and advantages of the disclosed embodiments will be realized and attained by means of the elements and combinations particularly pointed out in the appended claims.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an exemplary system infrastructure for a vehicle including a combined inverter and converter, according to one or more embodiments.
FIG. 2 depicts an electrical power schematic of a three phase inverter module, according to one or more embodiments.
FIG. 3 depicts an exemplary system infrastructure for an inverter controller, according to one or more embodiments.
FIG. 4 depicts an electrical power schematic of a T-type three level power module with a neutral power rail, according to one or more embodiments.
FIG. 5 depicts an electrical power schematic of a T-type three level power module with split neutral switches, according to one or more embodiments.
FIG. 6 depicts an electrical power schematic of a T-type three level power module with a neutral power rail and split neutral switches, according to one or more embodiments.
FIG. 7 depicts a four leaded power module with four-die switches in a drain-down configuration with a neutral power rail, according to one or more embodiments.
FIG. 8 depicts a four leaded power module with four-die switches in a drain-down configuration with split neutral switches, according to one or more embodiments.
FIG. 9 depicts a four leaded power module with four-die switches in a drain-down configuration with a neutral power rail and split neutral switches, according to one or more embodiments.
FIG. 10 depicts a top-down connection of a four leaded power module on a capacitor, according to one or more embodiments.

### DETAILED DESCRIPTION OF EMBODIMENTS

Both the foregoing general description and the following detailed description are exemplary and explanatory only and are not restrictive of the features, as claimed. As used herein, the terms "comprises," "comprising," "has," "having," "includes," "including," or other variations thereof, are intended to cover a non-exclusive inclusion such that a process, method, article, or apparatus that comprises a list of elements does not include only those elements, but may include other elements not expressly listed or inherent to such a process, method, article, or apparatus. In this disclosure, unless stated otherwise, relative terms, such as, for example, "about," "substantially," and "approximately" are used to indicate a possible variation of ±10% in the stated value. In this disclosure, unless stated otherwise, any numeric value may include a possible variation of ±10% in the stated value.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. For example, in the context of the disclosure, the switching devices may be described as switches or devices, but may refer to any device for controlling the flow of power in an electrical circuit. For example, switches may be metal-oxide-semiconductor field-effect transistors (MOSFETs), bipolar junction transistors (BJTs), insulated-gate bipolar transistors (IGBTs), or relays, for example, or any combination thereof, but are not limited thereto.

Various embodiments of the present disclosure relate generally to systems for a power module for a multi-level inverter, and, more particularly, to systems for a power module for a multi-level inverter for an electric vehicle. Inverters, such as those used to drive a motor in an electric vehicle, for example, are responsible for converting Direct Current (DC) into Alternating Current (AC) to drive the motor. A three phase inverter may include a bridge with six power device switches (for example, power transistors such as IGBT or MOSFET) that are controlled by Pulse Width Modulation (PWM) signals generated by a controller.

In some systems, two-level inverters are popular due to their low cost and simple structure. However, two-level inverters may generate an output voltage including a high level of harmonics and a relatively low efficiency at a higher switching frequency. Three-level inverter topology may address some issues of the two-level inverters, such as the high level of harmonics in output voltage and the relatively lower efficiency at higher switching frequencies. In contrast to two-level inverters, multilevel inverters, such as three-level inverters, may generate output voltage waveforms with lower harmonics to better resemble sinusoidal references. Moreover, lower dv/dt and electromagnetic interference (EMI) emissions may be achieved using multilevel topology. Accordingly, a T-type three-level inverter may be a more suitable (or beneficial) topology among the multilevel inverters due to three level output voltage capability and a lesser number of switching devices.

With the advent of electric vehicles, driving three phase motors more efficiently may be becoming increasingly important. Three phase motors may be driven with three half-H or phase switches that switch the motor phase connections between a positive high voltage direct current voltage source (HVDC+) and a negative high voltage direct current voltage source (HVDC-). The loop inductance associated with the phase switches may be important, and may be even more important as silicon carbide (SiC) devices become more prevalent. Lower loop inductance may be especially important with fast SiC devices as lower loop inductance may allow faster switching times while maintaining appropriate voltage along with appropriate current overshoots and ringing.

Three level T-type power modules for power class 100kW-250kW inverters for the automotive market are limited or non-existent. Some systems may include challenges with thermal performances of three level single side cooled power modules for industrial and/or automotive applications. Some systems may include relatively large commutation loops and complex heat sink assemblies for a T-type topology with single switches. Some systems may include noise coupling to power supplies due to relatively high inductances for T-type topology built with single switches.

For example, some systems may include a stacked arrangement of power modules with single switches. Some systems may include a parallel arrangement of power modules with single switches.

One or more embodiments may include one or more dies forming switches Q1, Q5, and Q9 electrically connected to a positive DC power terminal, one or more dies forming switches Q2, Q6, and Q10 electrically connected to a negative DC power terminal, and one or more dies forming switches Q3-Q4, Q7-Q8, and Q11-Q12 electrically connected to a neutral power terminal. One or more embodiments may include gate leads having the same geometry for all phases, which may enhance the balance of current distribution to provide better electrical behavior.

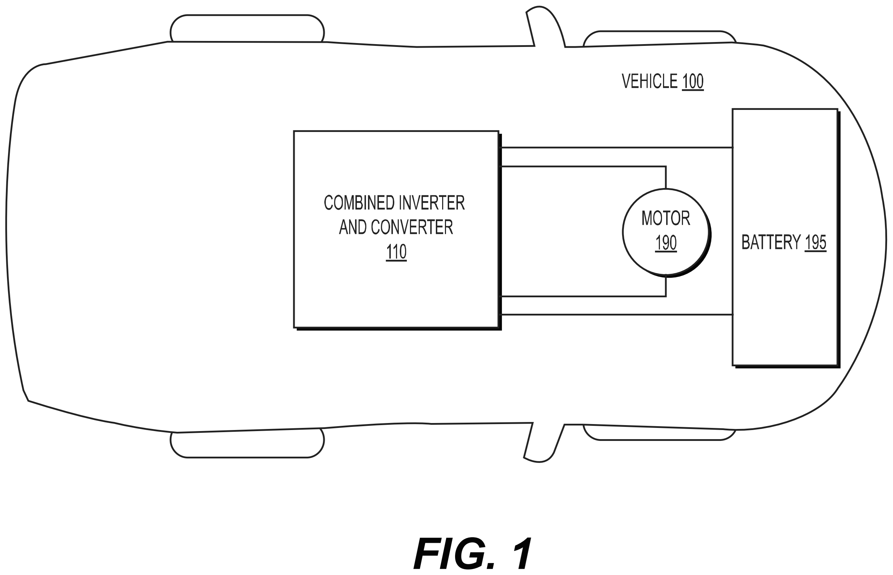

FIG. 1 depicts an exemplary system infrastructure for a vehicle including a combined inverter and converter, according to one or more embodiments. Alternatively, the inverter may be an inverter without a converter. In the context of this disclosure, the inverter without a converter, or the combined inverter and converter, may be referred to as an inverter. As shown in FIG. 1, electric vehicle 100 may include an inverter 110, a motor 190, and a battery 195. The inverter 110 may include components to receive electrical power from an external source and output electrical power to charge the battery 195 of electric vehicle 100. The inverter 110 may convert DC power from the battery 195 in electric vehicle 100 to AC power, to drive (e.g. rotate) the motor 190 of the electric vehicle 100, for example, but the embodiments are not limited thereto. The inverter 110 may be bidirectional, and may convert DC power to AC power, or convert AC power to DC power, such as during regenerative braking, for example. The inverter 110 may be a three-phase inverter, a single-phase inverter, or a multi-phase inverter.

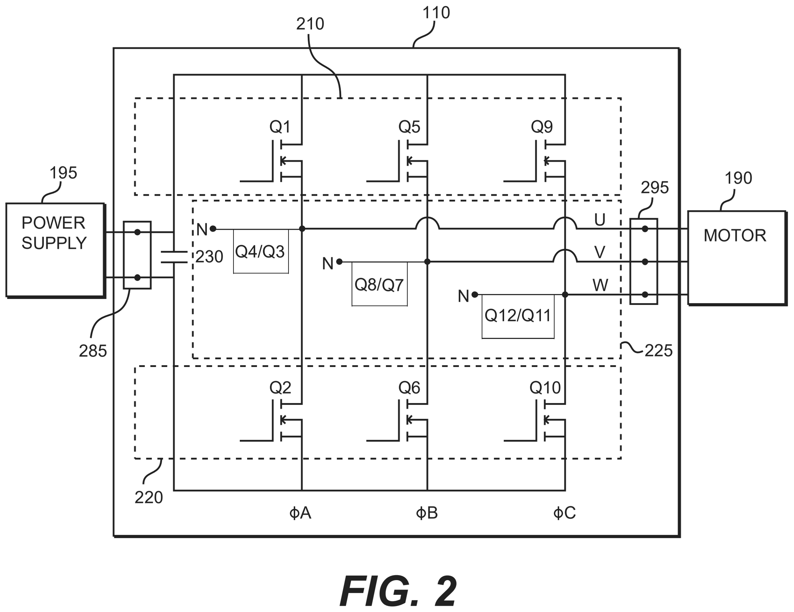

FIG. 2 depicts an electrical power schematic of a three phase inverter module, according to one or more embodiments. As shown in FIGS. 1 and 2, the inverter 110 may be connected to the battery 195 and the motor 190. Battery 195 may be any power supply, and motor 190 may be any load. The inverter 110 may a include first three-phase switch group 210, a second three-phase switch group 220, and a third three-phase switch group 225. A first phase U may correlate with ΦA including switch Q1, switch Q2, switch Q3, switch Q4, and neutral power terminal N, a second phase V may correlate with ΦB including switch Q5, switch Q6, switch Q7, switch Q8, and neutral power terminal N, and a third phase W may correlate with ΦC including switch Q9, switch Q10, switch Q11, switch Q12, and neutral power terminal N.

The first three-phase switch group 210 may include first phase switch Q1, second phase switch Q5, and third phase switch Q9. The second three-phase switch group 220 may include first phase switch Q2, second phase switch Q6, and third phase switch Q10. The third three-phase switch group 225 may include first phase switches Q3 and Q4, second phase switches Q7 and Q8, and third phase switches Q11 and Q12. The switches Q1-Q12 may be metal-oxide-semiconductor field-effect transistors (MOSFET), insulated-gate bipolar transistors (IGBTs), silicon carbide (SiC) transistors, and/or gallium nitride (GaN) transistors, for example, but embodiments are not limited thereto. The switches Q1-Q12 may each include multiple dies arranged in parallel, but embodiments are not limited thereto. Although switches are depicted as one switch in FIG. 2, each switch may be one or more switches. Switch Q3 and switch Q4, for example, may be a switch group, as depicted in FIG. 2.

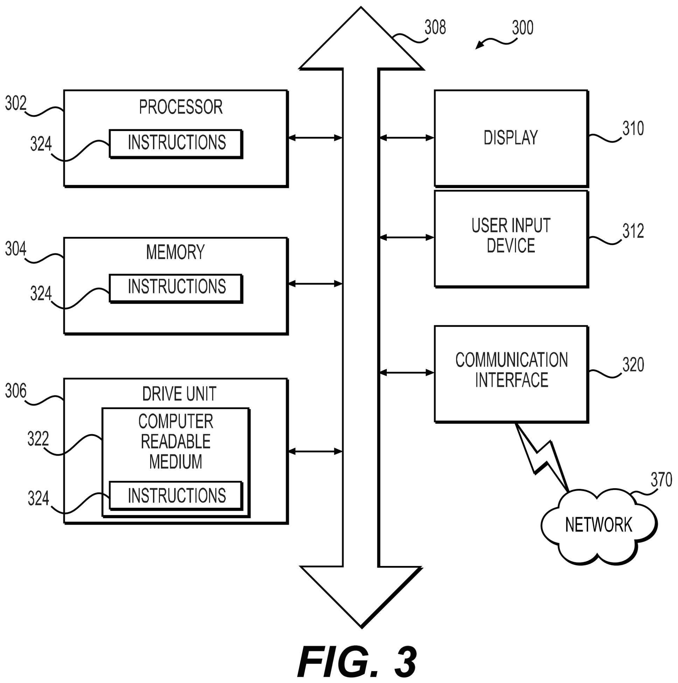

The first three-phase switch group 210, the second three-phase switch group 220, and the third three-phase switch group 225 may be driven by a PWM signal generated by inverter controller 300 (shown in FIG. 3) to convert DC power delivered via input terminal set 285 at capacitor 230 to three phase AC power at outputs U, V, and W via output terminal set 295 to the motor 190. Additionally, although FIGS. 1 and 2 illustrate a three-phase inverter, the disclosure is not limited thereto, and may include single phase or multi-phase inverters.

FIG. 3 depicts an exemplary system infrastructure for an inverter controller, according to one or more embodiments. The inverter controller 300 may include a set of instructions that can be executed to cause the inverter controller 300 to perform any one or more of the methods or computer based functions disclosed herein. The inverter controller 300 may operate as a standalone device or may be connected, e.g., using a network, to other computer systems or peripheral devices.

In a networked deployment, the inverter controller 300 may operate in the capacity of a server or as a client in a server-client user network environment, or as a peer computer system in a peer-to-peer (or distributed) network environment. The inverter controller 300 can also be implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In a particular implementation, the inverter controller 300 can be implemented using electronic devices that provide voice, video, or data communication. Further, while the inverter controller 300 is illustrated as a single system, the term "system" shall also be taken to include any collection of systems or sub-systems that individually or jointly execute a set, or multiple sets, of instructions to perform one or more computer functions.

As shown in FIG. 3, the inverter controller 300 may include a processor 302, e.g., a central processing unit (CPU), a graphics processing unit (GPU), or both. The processor 302 may be a component in a variety of systems. For example, the processor 302 may be part of a standard inverter. The processor 302 may be one or more general processors, digital signal processors, application specific integrated circuits, field programmable gate arrays, servers, networks, digital circuits, analog circuits, combinations thereof, or other now known or later developed devices for analyzing and processing data. The processor 302 may implement a software program, such as code generated manually (i.e., programmed).

The inverter controller 300 may include a memory 304 that can communicate via a bus 308. The memory 304 may be a main memory, a static memory, or a dynamic memory. The memory 304 may include, but is not limited to computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one implementation, the memory 304 includes a cache or random-access memory for the processor 302. In alternative implementations, the memory 304 is separate from the processor 302, such as a cache memory of a processor, the system memory, or other memory. The memory 304 may be an external storage device or database for storing data. Examples include a hard drive, compact disc ("CD"), digital video disc ("DVD"), memory card, memory stick, floppy disc, universal serial bus ("USB") memory device, or any other device operative to store data. The memory 304 is operable to store instructions executable by the processor 302. The functions, acts or tasks illustrated in the figures or described herein may be performed by the processor 302 executing the instructions stored in the memory 304. The functions, acts or tasks are independent of the particular type of instructions set, storage media, processor or processing strategy and may be performed by software, hardware, integrated circuits, firmware, micro-code and the like, operating alone or in combination. Likewise, processing strategies may include multiprocessing, multitasking, parallel processing and the like.

As shown, the inverter controller 300 may further include a display 310, such as a liquid crystal display (LCD), an organic light emitting diode (OLED), a flat panel display, a solid-state display, a cathode ray tube (CRT), a projector, a printer or other now known or later developed display device for outputting determined information. The display 310 may act as an interface for the user to see the functioning of the processor 302, or specifically as an interface with the software stored in the memory 304 or in the drive unit 306.

Additionally or alternatively, the inverter controller 300 may include an input device 312 configured to allow a user to interact with any of the components of the inverter controller 300. The input device 312 may be a number pad, a keyboard, or a cursor control device, such as a mouse, or a joystick, touch screen display, remote control, or any other device operative to interact with the inverter controller 300.

The inverter controller 300 may also or alternatively include drive unit 306 implemented as a disk or optical drive. The drive unit 306 may include a computer-readable medium 322 in which the instructions 324 (e.g., one or more sets of instructions), e.g. software, can be embedded. Further, the instructions 324 may embody one or more of the methods or logic as described herein. The instructions 324 may reside completely or partially within the memory 304 and/or within the processor 302 during execution by the inverter controller 300. The memory 304 and the processor 302 also may include computer-readable media as discussed above.

In some systems, the computer-readable medium 322 includes instructions 324 or receives and executes instructions 324 responsive to a propagated signal so that a device connected to a network 370 can communicate voice, video, audio, images, or any other data over the network 370. Further, the instructions 324 may be transmitted or received over the network 370 via a communication port or interface 320, and/or using a bus 308. The communication port or interface 320 may be a part of the processor 302 or may be a separate component. The communication port or interface 320 may be created in software or may be a physical connection in hardware. The communication port or interface 320 may be configured to connect with a network 370, external media, the display 310, or any other components in inverter controller 300, or combinations thereof. The connection with the network 370 may be a physical connection, such as a wired Ethernet connection or may be established wirelessly as discussed below. Likewise, the additional connections with other components of the inverter controller 300 may be physical connections or may be established wirelessly. The network 370 may alternatively be directly connected to a bus 308.

While the computer-readable medium 322 is shown to be a single medium, the term "computer-readable medium" may include a single medium or multiple media, such as a centralized or distributed database, and/or associated caches and servers that store one or more sets of instructions. The term "computer-readable medium" may also include any medium that is capable of storing, encoding, or carrying a set of instructions for execution by a processor or that cause a computer system to perform any one or more of the methods or operations disclosed herein. The computer-readable medium 322 may be non-transitory, and may be tangible.

The computer-readable medium 322 can include a solid-state memory such as a memory card or other package that houses one or more non-volatile read-only memories. The computer-readable medium 322 can be a random-access memory or other volatile re-writable memory. Additionally or alternatively, the computer-readable medium 322 can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative implementation, dedicated hardware implementations, such as application specific integrated circuits, programmable logic arrays and other hardware devices, can be constructed to implement one or more of the methods described herein. Applications that may include the apparatus and systems of various implementations can broadly include a variety of electronic and computer systems. One or more implementations described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

The inverter controller 300 may be connected to a network 370. The network 370 may define one or more networks including wired or wireless networks. The wireless network may be a cellular telephone network, an 802.11, 802.16, 802.20, or WiMAX network. Further, such networks may include a public network, such as the Internet, a private network, such as an intranet, or combinations thereof, and may utilize a variety of networking protocols now available or later developed including, but not limited to TCP/IP based networking protocols. The network 370 may include wide area networks (WAN), such as the Internet, local area networks (LAN), campus area networks, metropolitan area networks, a direct connection such as through a Universal Serial Bus (USB) port, or any other networks that may allow for data communication. The network 370 may be configured to couple one computing device to another computing device to enable communication of data between the devices. The network 370 may generally be enabled to employ any form of machine-readable media for communicating information from one device to another. The network 370 may include communication methods by which information may travel between computing devices. The network 370 may be divided into sub-networks. The sub-networks may allow access to all of the other components connected thereto or the sub-networks may restrict access between the components. The network 370 may be regarded as a public or private network connection and may include, for example, a virtual private network or an encryption or other security mechanism employed over the public Internet, or the like.

In accordance with various implementations of the present disclosure, the methods described herein may be implemented by software programs executable by a computer system. Further, in an exemplary, non-limited implementation, implementations can include distributed processing, component or object distributed processing, and parallel processing. Alternatively, virtual computer system processing can be constructed to implement one or more of the methods or functionality as described herein.

Although the present specification describes components and functions that may be implemented in particular implementations with reference to particular standards and protocols, the disclosure is not limited to such standards and protocols. For example, standards for Internet and other packet switched network transmission (e.g., TCP/IP, UDP/IP, HTML, HTTP) represent examples of the state of the art. Such standards are periodically superseded by faster or more efficient equivalents having essentially the same functions. Accordingly, replacement standards and protocols having the same or similar functions as those disclosed herein are considered equivalents thereof.

It will be understood that the operations of methods discussed are performed in one embodiment by an appropriate processor (or processors) of a processing (i.e., computer) system executing instructions (computer-readable code) stored in storage. It will also be understood that the disclosure is not limited to any particular implementation or programming technique and that the disclosure may be implemented using any appropriate techniques for implementing the functionality described herein. The disclosure is not limited to any particular programming language or operating system.

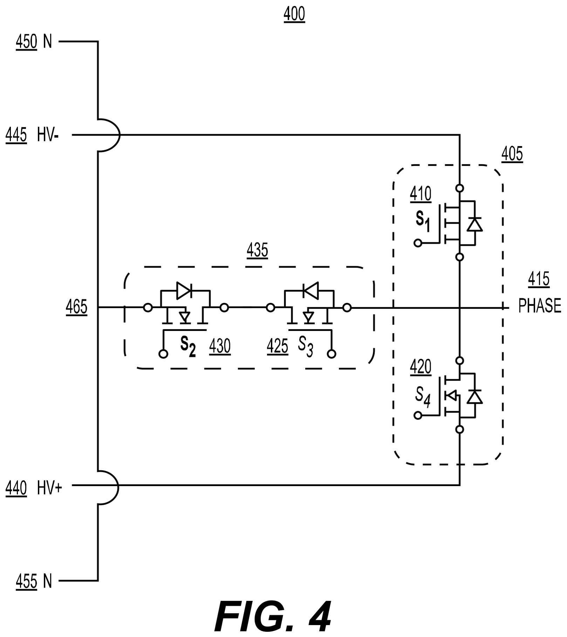

FIG. 4 depicts an electrical power schematic of a T-type three level power module with a neutral power rail, according to one or more embodiments. Power module 400 may include a first switch 410, switch group 435, and a fourth switch 420. Switch group 435 may include second switch 430 and third switch 425. Power module 400 may include a positive DC power connection 440, a negative DC power connection 445, a neutral power connection 465, and a phase connection 415. Neutral power connection 465 may include first neutral power leg 450 and second neutral power leg 455.

First switch 410 may be electrically connected to the negative DC power connection 445 and the phase connection 415. Second switch 430 may be connected to neutral power connection 465 and third switch 425. Third switch 425 may be connected to phase connection 415 and second switch 430. Fourth switch 420 may be electrically connected to the positive DC power connection 440 and the phase connection 415. First neutral power leg 450 may be a first neutral power tab. Second neutral power leg 455 may be a second neutral power tab. For example, first switch 410 may close to connect phase connection 415 to negative DC power connection 445.

Switch group 435 may be connected to neutral power connection 465 and phase connection 415. For example, second switch 430 may be electrically connected (or arranged) in series with third switch 425. Third switch 425 may be connected to phase connection 415 and second switch 430. The first switch 410, the fourth switch 420, and the third switch 425 may be electrically connected to the phase connection such that the first switch 410, the second switch 430, the third switch 425, and the fourth switch 420 are arranged in a T-type arrangement. First switch 410, fourth switch 420, second switch 430, and third switch 425 may each include one or more semiconductor dies or two or more semiconductor dies. For example, First switch 410, fourth switch 420, second switch 430, and third switch 425 may each include one semiconductor die, two semiconductor dies, or four semiconductor dies, but embodiments are not limited thereto. The semiconductor dies may include transistors, and each transistor may include one or more metal-oxide-semiconductor field-effect transistors (MOSFET), for example, but embodiments are not limited thereto. The transistors may each include a source, a drain, and a gate.

Switch group 405 may include the source of first switch 410 connected to the drain of fourth switch 420. Switch group 435 may include the drain of second switch 430 connected to the drain of third switch 425. Switch group 435 may be connected to neutral power connection 465. Neutral power connection 465 may be split into first neutral power leg 450 and second neutral power leg 455, with first neutral power leg 450 traversing negative DC power connection 445 but not connecting to negative DC power connection 445, and second neutral power leg 455 traversing positive DC power connection 440 but not connecting to positive DC power connection 440. Phase connection 415 may be an AC power tap.

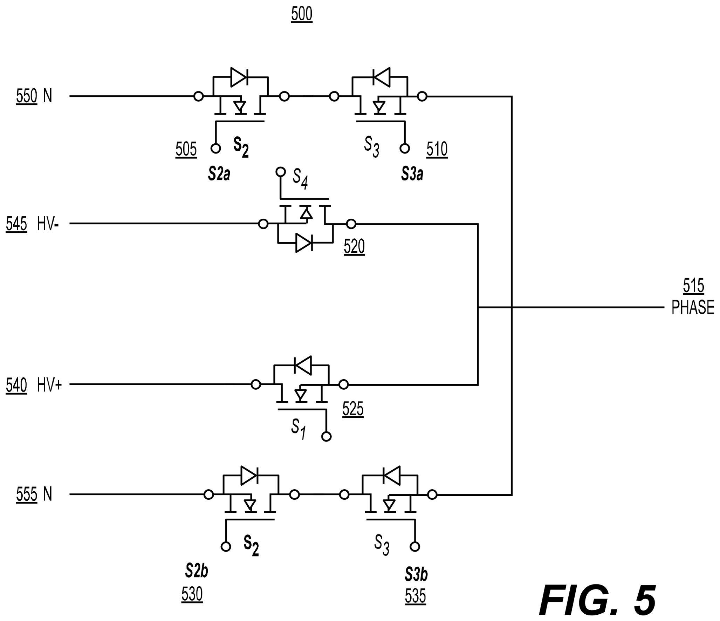

FIG. 5 depicts an electrical power schematic of a T-type three level power module with split neutral switches, according to one or more embodiments. Power module 500 may include first neutral switch 505, second neutral switch 510, negative switch 520, positive switch 525, third neutral switch 530, and fourth neutral switch 535. Power module 500 may include positive DC power connection 540, negative DC power connection 545, first neutral power leg 550, second neutral power leg 555, and phase connection 515.

Positive switch 525 may be connected to positive DC power connection 540 and to phase connection 515. Negative switch 520 may be connected to negative DC power connection 545 and to phase connection 515. First neutral switch 505 may be connected in series to second neutral switch 510. First neutral switch 505 may be connected to first neutral power leg 550 and to second neutral switch 510. Second neutral switch 510 may be connected to first neutral switch 505 and to phase connection 515. Third neutral switch 530 may be connected in series to fourth neutral switch 535. Third neutral switch 530 may be connected to second neutral power leg 555 and to fourth neutral switch 535. Fourth neutral switch 535 may be connected to third neutral switch 530 and to phase connection 515.

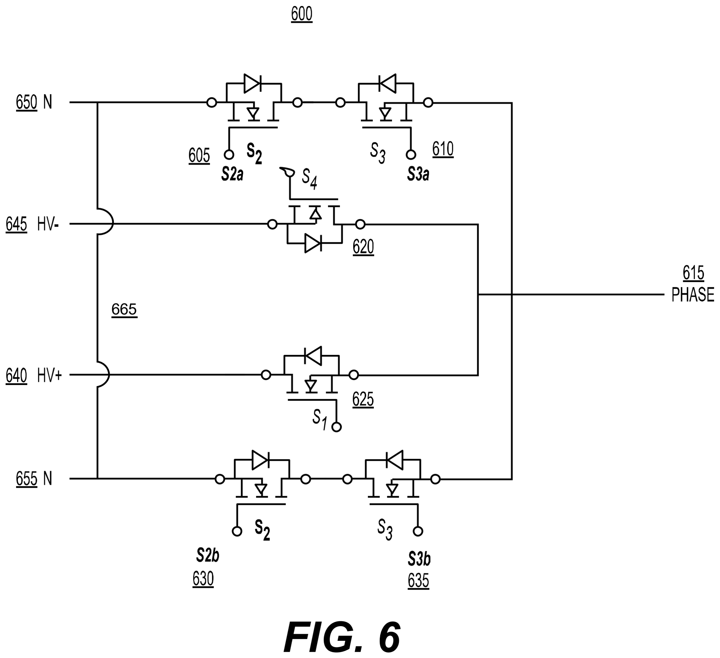

FIG. 6 depicts an electrical power schematic of a T-type three level power module with a neutral power rail and split neutral switches, according to one or more embodiments. Power module 600 may include a first switch 605, a second switch 610, a third switch 620, a fourth switch 625, a fifth switch 630, and a sixth switch 635. Power module 600 may include positive DC power connection 640, negative DC power connection 645, first neutral power leg 650, second neutral power leg 655, phase connection 615, and neutral power rail 665.

Fourth switch 625 may be connected to positive DC power connection 640 and to phase connection 615. Third switch 620 may be connected to negative DC power connection 645 and to phase connection 615. First switch 605 may be connected in series to second switch 610. First switch 605 may be connected to first neutral power leg 650 and to second switch 610. Second switch 610 may be connected to first switch 605 and to phase connection 615. Fifth switch 630 may be connected in series to sixth switch 635. Fifth switch 630 may be connected to second neutral power leg 655 and to sixth switch 635. Sixth switch 635 may be connected to fifth switch 630 and to phase connection 615.

First neutral power leg 650 and second neutral power leg 655 may be connected at a neutral power rail 665. Neutral power rail 665 may be split into first neutral power leg 650 and second neutral power leg 655. Neutral power rail 665 may traverse negative DC power connection 645 and positive DC power connection 640 without connecting to either negative DC power connection 645 or positive DC power connection 640. For example, neutral power rail 665 may be cross-routed over connections to the positive DC power connection 640 and negative DC power connection 645, without connecting to the positive DC power connection 640 and negative DC power connection 645. Neutral power rail 665 may be connected to first neutral power leg 650 and second neutral power leg 655 while being cross-routed over connections to the positive DC power connection 640 and negative DC power connection 645.

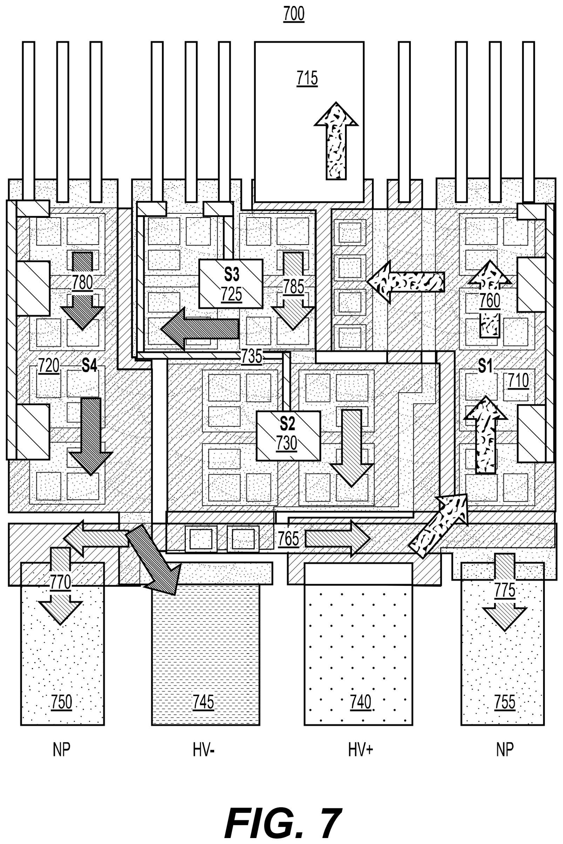

FIG. 7 depicts a four leaded power module with four-die switches in a drain-down configuration with a neutral power rail, according to one or more embodiments. Power module 700 may include first switch 710, second switch 730, third switch 725, fourth switch 720, AC power tab 715, switch group 735, positive DC power tab 740, negative DC power tab 745, first neutral power tab 750, second neutral power tab 755, and neutral power rail 765.

First switch 710 may be electrically connected to the negative DC power tab 745 and the AC power tab 715. Second switch 730 may be electrically connected to neutral power rail 765 and third switch 725. Third switch 725 may be electrically connected to AC power tab 715 and second switch 730. Fourth switch 420 may be electrically connected to the positive DC power tab 740 and the AC power tab 715. First neutral power tab 750 may be electrically connected to second neutral power tab 755 by neutral power rail 765.

With reference to FIG. 4, first switch 710 may correlate with first switch 410, AC power tab 715 may correlate with phase connection 415, fourth switch 720 may correlate with fourth switch 420, third switch 725 may correlate with third switch 425, second switch 730 may correlate with second switch 430, switch group 735 may correlate with switch group 435, positive DC power tab 740 may correlate with positive DC power connection 440, negative DC power tab 745 may correlate with negative DC power connection 445, first neutral power tab 750 may correlate with first neutral power leg 450, second neutral power tab 755 may correlate with second neutral power leg 455, and neutral power rail 765 may correlate with neutral power connection 465.

Power module 700 may include one or more control pins electrically connected to semiconductor dies in each of first switch 710, fourth switch 720, third switch 725, and second switch 730. For example, the one or more control pins may be electrically connected to gates of one or more transistors in each semiconductor die in the first switch 710, the second switch 730, the third switch 725, and the fourth switch 720.

As depicted in FIG. 7, current may flow along path 760 through first switch 710 from positive DC power tab 740 to AC power tab 715, and along path 780 through fourth switch 720 from AC power tab 715 to negative DC power tab 745. Current may flow along path 785 through third switch 725 and second switch 730 from AC power tab 715 to first neutral power tab 750 and second neutral power tab 755. The current from path 785 may be split at neutral power rail 765, so that current flows along path 770 to first neutral power tab 750 and current flows along path 775 to second neutral power tab 755. This switch arrangement and routing may provide lower loop inductance, which may allow faster switching times while maintaining appropriate voltage along with appropriate current overshoots and ringing.

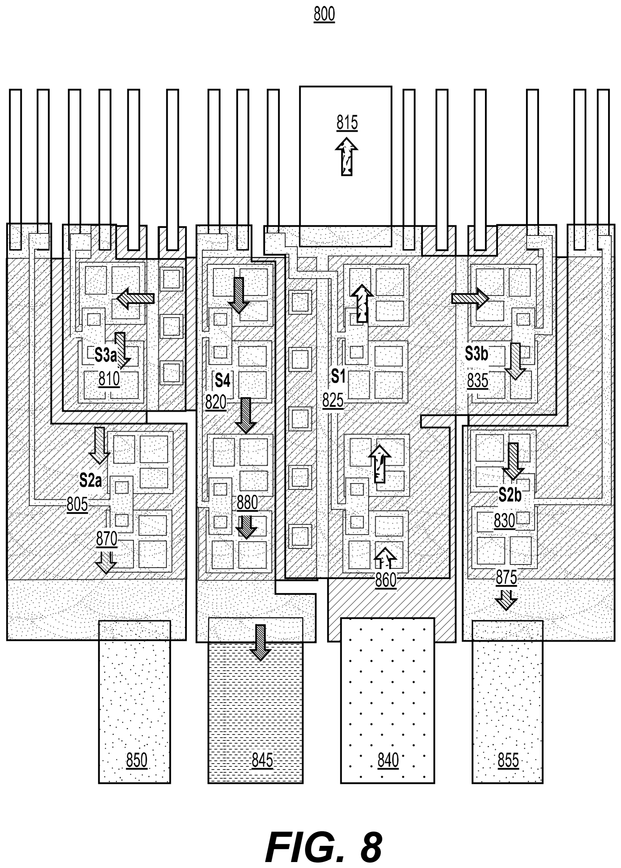

FIG. 8 depicts a four leaded power module with four-die switches in a drain-down configuration with split neutral switches, according to one or more embodiments. Power module 800 may include first switch 805, second switch 810, third switch 820, fourth switch 825, fifth switch 830, sixth switch 835, AC power tab 815, positive DC power tab 840, negative DC power tab 845, first neutral power tab 850, second neutral power tab 855, and neutral power rail 865.

Fourth switch 825 may be electrically connected to positive DC power tab 840 and to AC power tab 815. Third switch 820 may be electrically connected to negative DC power tab 845 and to AC power tab 815. First switch 805 may be electrically connected in series to second switch 810. First switch 805 may be electrically connected to first neutral power tab 850 and to second switch 810. Second switch 810 may be electrically connected to first switch 805 and to AC power tab 815. Fifth switch 830 may be electrically connected in series to sixth switch 835. Fifth switch 830 may be electrically connected to second neutral power tab 855 and to sixth switch 835. Sixth switch 835 may be electrically connected to fifth switch 830 and to AC power tab 815.

With reference to FIG. 5, first switch 805 may correlate with first neutral switch 505, second switch 810 may correlate with second neutral switch 510, AC power tab 815 may correlate with phase connection 515, third switch 820 may correlate with negative switch 520, fourth switch 825 may correlate with positive switch 525, fifth switch 830 may correlate with third neutral switch 530, sixth switch 835 may correlate with fourth neutral switch 535, positive DC power tab 840 may correlate with positive DC power connection 540, negative DC power tab 845 may correlate with negative DC power connection 545, first neutral power tab 850 may correlate with first neutral power leg 550, and second neutral power tab 855 may correlate with second neutral power leg 555.

Power module 800 may include one or more control pins electrically connected to semiconductor dies in each of first switch 805, second switch 810, third switch 820, fourth switch 825, fifth switch 830, and sixth switch 835. For example, the one or more control pins may be electrically connected to gates of one or more transistors in each semiconductor die in the first switch 805, second switch 810, third switch 820, fourth switch 825, fifth switch 830, and sixth switch 835.

As depicted in FIG. 8, current may flow along path 860 through fourth switch 825 from positive DC power tab 840 to AC power tab 815, and along path 880 through third switch 820 from AC power tab 815 to negative DC power tab 845. Current may flow along path 870 through second switch 810 and first switch 805 from AC power tab 815 to first neutral power tab 850. Current may flow along path 875 through sixth switch 835 and fifth switch 830 from AC power tab 815 to second neutral power tab 855. This coaxial switch arrangement and routing may provide lower loop inductance, which may allow faster switching times while maintaining appropriate voltage along with appropriate current overshoots and ringing.

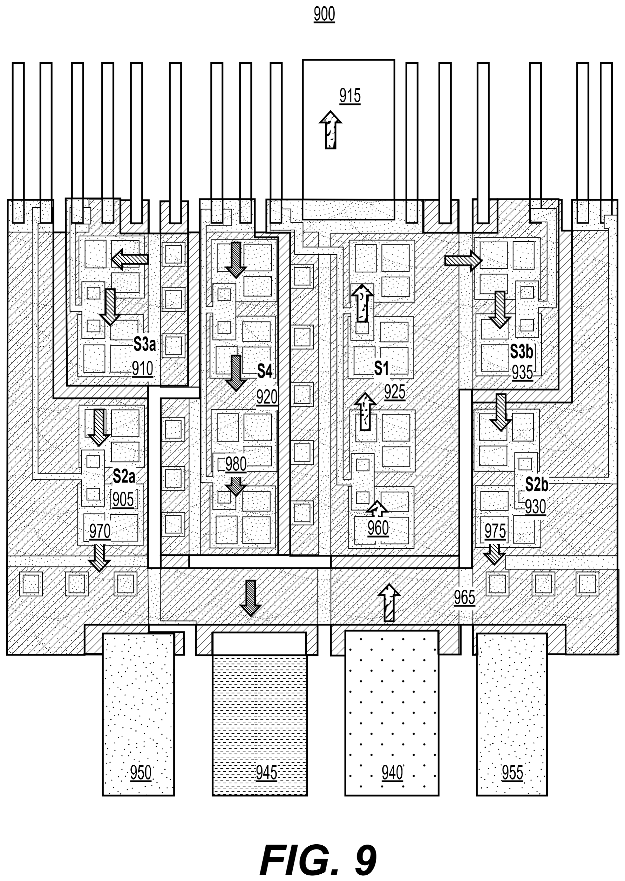

FIG. 9 depicts a four leaded power module with four-die switches in a drain-down configuration with a neutral power rail and split neutral switches, according to one or more embodiments. Power module 900 may include first switch 905, second switch 910, AC power tab 915, third switch 920, fourth switch 925, fifth switch 930, sixth switch 935, positive DC power tab 940, negative DC power tab 945, first neutral power tab 950, second neutral power tab 955, and neutral power rail 965.

Fourth switch 925 may be electrically connected to positive DC power tab 940 and to AC power tab 915. Third switch 920 may be electrically connected to negative DC power tab 945 and to AC power tab 915. First switch 905 may be electrically connected in series to second switch 910. First switch 905 may be electrically connected to first neutral power tab 950 and to second switch 910. Second switch 910 may be electrically connected to first switch 905 and to AC power tab 915. Fifth switch 930 may be electrically connected in series to sixth switch 935. Fifth switch 930 may be electrically connected to second neutral power tab 955 and to sixth switch 935. Sixth switch 935 may be electrically connected to fifth switch 930 and to AC power tab 915.

Drain connection of fourth switch 925 may be electrically connected to positive DC power tab 940 and may be electrically connected at source connection of fourth switch 925 to AC power tab 915. Source connection of third switch 920 may be electrically connected to negative DC power tab 945 and drain connection of third switch 920 may be electrically connected to AC power tab 915. Source connection first switch 905 may be electrically connected to first neutral power tab 950 and drain connection of first switch 905 may be electrically connected to second switch 910. Drain connection of second switch 910 may be electrically connected to first switch 905 and source connection of second switch 910 may be electrically connected to AC power tab 915. Fifth switch 930 may be electrically connected in series to sixth switch 935. Source connection of fifth switch 930 may be electrically connected to second neutral power tab 955, and drain connection of fifth switch 930 may be electrically connected to sixth switch 935. Drain connection of sixth switch 935 may be electrically connected to fifth switch 930, and source connection of sixth switch 935 may be electrically connected to AC power tab 915. The source and drain connections described above are example connections, and the disclosure is not limited to thereto.

First neutral power tab 950 and second neutral power tab 955 may be electrically connected at a neutral power rail 965. Neutral power rail 965 may be split into first neutral power tab 950 and second neutral power tab 955. Neutral power rail 965 may be electrically connected to first neutral power tab 950 and second neutral power tab 955, and neutral power rail 965 may traverse negative DC power tab 945 and positive DC power tab 940 without connecting to either negative DC power tab 945 or positive DC power tab 940.

With reference to FIG. 6, first switch 905 may correlate with first switch 605, second switch 910 may correlate with second switch 610, AC power tab 915 may correlate with phase connection 615, third switch 920 may correlate with third switch 620, fourth switch 925 may correlate with fourth switch 625, fifth switch 930 may correlate with fifth switch 630, sixth switch 935 may correlate with sixth switch 635, positive DC power tab 940 may correlate with positive DC power connection 640, negative DC power tab 945 may correlate with negative DC power connection 645, first neutral power tab 950 may correlate with first neutral power leg 650, and second neutral power tab 955 may correlate with second neutral power leg 655.

Power module 900 may include one or more control pins electrically connected to semiconductor dies in each of first switch 905, second switch 910, third switch 920, fourth switch 925, fifth switch 930, and sixth switch 935. For example, the one or more control pins may be electrically connected to gates of one or more transistors in each semiconductor die in the first switch 905, second switch 910, third switch 920, fourth switch 925, fifth switch 930, and sixth switch 935. First neutral power tab 950 and the second neutral power tab 955 may be on opposite sides of the positive DC power tab 940 and the negative DC power tab 945.

As depicted in FIG. 9, current may flow along path 960 through fourth switch 925 from positive DC power tab 940 to AC power tab 915, and along path 980 through third switch 920 from AC power tab 915 to negative DC power tab 945. Current may flow along path 970 through second switch 910 and first switch 905 from AC power tab 915 to first neutral power tab 950. Current may flow along path 975 through sixth switch 935 and fifth switch 930 from AC power tab 915 to second neutral power tab 955. This switch arrangement and routing may provide lower loop inductance, which may allow faster switching times while maintaining appropriate voltage along with appropriate current overshoots and ringing.

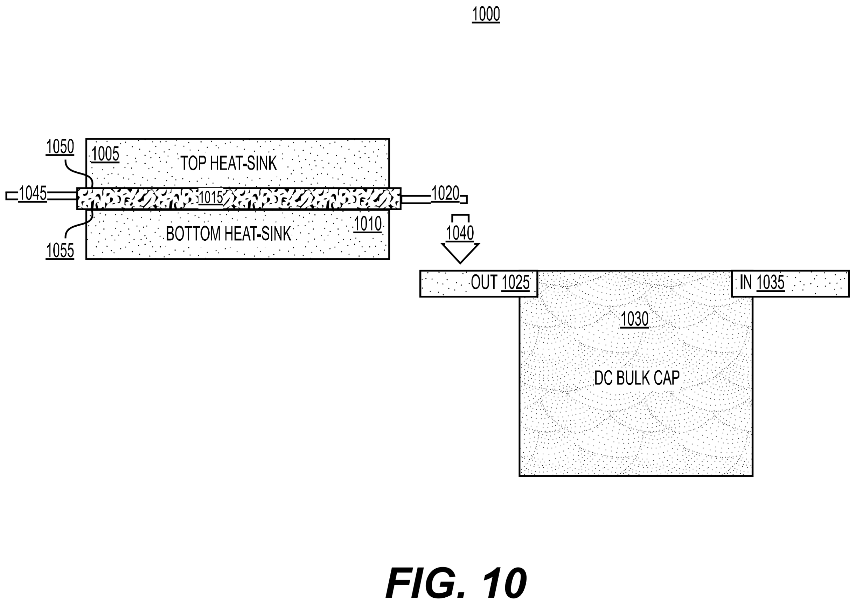

FIG. 10 depicts a top-down connection of a four leaded power module on a capacitor, according to one or more embodiments. Power module arrangement 1000 may include first heat sink 1005, second heat sink 1010, power module 1015, first lead 1020, out-lead 1025, DC bulk capacitor 1030, in-lead 1035, second lead 1045, first surface 1050, and second surface 1055.

First heat sink 1005 may be a top heat-sink, and may arranged on a first surface 1050 of power module 1015. Second heat sink 1010 may be a bottom heat-sink, and may be arranged on a second surface 1055 of power module 1015. Power module 1015 may be mounted to DC bulk capacitor 1030 in a direction 1040. First lead 1020 of power module 1015 may be connected to out-lead 1025, and DC bulk capacitor 1030 may have in-lead 1035. Power module 1015 may have second lead 1045. Power module arrangement 1000 may depict an arrangement of a power module where the module is placed after the capacitor in a top-down mounting. However, power module arrangement 1000 may include alternate placement of the DC bulk capacitor 1030, or alternate mounting of the power module 1015. Power module 1015 may be have a T-Type power module design and may be constructed to allow a top-down assembly. A placement of the power module 1015 may be performed top down before or after mounting of the capacitor.

One or more embodiments may provide a power module for a multi-level inverter for an electric vehicle. One or more embodiments may provide a three-level inverter topology that may address some issues of the two-level inverters, such as the high level of harmonics in output voltage and the relatively lower efficiency at higher switching frequencies. One or more embodiments may provide a three-level inverter that may generate output voltage waveforms with lower harmonics to better resemble sinusoidal references. One or more embodiments may provide a multi-level inverter with lower dv/dt and electromagnetic interference (EMI) emissions. One or more embodiments may provide a T-type three-level inverter with three level output voltage capability. One or more embodiments may provide a multi-level inverter with lower loop inductance, which may allow faster switching times while maintaining appropriate voltage along with appropriate current overshoots and ringing. One or more embodiments may provide a three level T-type power module for power class 100kW-250kW inverters for the automotive market. One or more embodiments may include gate leads having the same geometry for all phases, which may enhance the balance of current distribution to provide better electrical behavior.

Other embodiments of the disclosure will be apparent to those skilled in the art from consideration of the specification and practice of the invention disclosed herein. It is intended that the specification and examples be considered as exemplary only, with a true scope of the invention being indicated by the following claims.

## Claims

1. A system comprising an inverter to convert DC power from a battery to AC power to drive a motor, wherein the inverter includes:
a power module including:
a positive DC power tab;
a negative DC power tab;
an AC power tab;
a first neutral power tab;
a second neutral power tab, wherein the first neutral power tab and the second neutral power tab are on opposite sides of the positive DC power tab and the negative DC power tab;
a first switch electrically connected to the positive DC power tab and the AC power tab;
a second switch electrically connected to the negative DC power tab and the AC power tab; and
one or more switches electrically connected to the AC power tab and one or more of the first neutral power tab or the second neutral power tab.

2. The system of claim 1, wherein the one or more switches include:
one or more first switches electrically connected to the first neutral power tab and the AC power tab; and
one or more second switches electrically connected to the second neutral power tab and the AC power tab.
and wherein, preferably:
the one or more first switches include:
a third switch electrically connected to the first neutral power tab, and
a fourth switch electrically connected to the third switch and the AC power tab; and
the one or more second switches include:
a fifth switch electrically connected to the second neutral power tab, and
a sixth switch electrically connected to the fifth switch and the AC power tab.

3. The system of any one of claims 1 to 2, wherein the power module further includes:
a neutral power rail electrically connecting the first neutral power tab and the second neutral power tab,
wherein the one or more switches are electrically connected to the neutral power rail and the AC power tab.

4. The system of claim 3, wherein the one or more switches include:
a third switch electrically connected to the neutral power rail, and
a fourth switch electrically connected to the third switch and the AC power tab.

5. The system of claim 3, wherein the one or more switches include:
one or more third switches electrically connected to the first neutral power tab and the AC power tab; and
one or more fourth switches electrically connected to the second neutral power tab and the AC power tab;
and wherein, preferably:
the one or more third switches include:
a third switch electrically connected to the neutral power rail, and
a fourth switch electrically connected to the third switch and the AC power tab; and
the one or more fourth switches include:
a fifth switch electrically connected to the neutral power rail, and
a sixth switch electrically connected to the fifth switch and the AC power tab.

6. The system of any one of claims 1 to 5, wherein the inverter further includes:
a first heat sink on a first side of the power module; and
a second heat sink on a second side of the power module.
and, preferably, wherein the inverter further includes:
a capacitor electrically connected to the power module.

7. The system of any one of claims 1 to 6, further comprising:
the battery configured to supply the DC power to the inverter; and
the motor configured to receive the AC power from the inverter to drive the motor,
wherein the inverter, the battery, and the motor are provided as a vehicle.

8. A power module comprising:
a positive DC power tab;
a negative DC power tab;
an AC power tab;
a first neutral power tab;
a second neutral power tab, wherein the first neutral power tab and the second neutral power tab are on opposite sides of the positive DC power tab and the negative DC power tab;
a first switch electrically connected to the positive DC power tab and the AC power tab;
a second switch electrically connected to the negative DC power tab and the AC power tab; and
one or more switches electrically connected to the AC power tab and one or more of the first neutral power tab or the second neutral power tab.

9. The power module of claim 8, wherein semiconductor dies in the first switch, the second switch, and the one or more switches are arranged in a drain-down arrangement.

10. The power module of any one of claims 8 to 9, wherein connections to the first neutral power tab and the second neutral power tab are cross-routed over connections to the positive DC power tab and the negative DC power tab.

11. The power module of any one of claims 8 to 10, wherein the one or more switches include:
one or more first switches electrically connected to the first neutral power tab and the AC power tab; and
one or more second switches electrically connected to the second neutral power tab and the AC power tab.

12. The power module of claim 11, further comprising:
a first gate pin electrically connected to the one or more first switches; and
a second gate pin electrically connected to the one or more second switches.
and/or further comprising:
a gate pin electrically connected to the one or more first switches and the one or more second switches.

13. A power module comprising:
a first switch electrically connected to a positive DC power tab and an AC power tab;
a second switch electrically connected to a negative DC power tab and the AC power tab;
a third switch electrically connected to the AC power tab and a first neutral power tab; and
a fourth switch electrically connected to the AC power tab and a second neutral power tab.

14. The power module of claim 13, wherein the third switch and the fourth switch are on opposite sides of the first switch and the second switch;
and/or wherein the first switch and the second switch are on opposite sides of the third switch and the fourth switch.

15. The power module of claim 13 or 14, further comprising:
a neutral power rail electrically connecting the first neutral power tab and the second neutral power tab,
wherein the third switch and the fourth switch are electrically connected to the neutral power rail and the AC power tab.
